Europäisches Patentamt

European Patent Office

Office européen des brevets

(19)

(11) Veröffentlichungsnummer: **0 247 375**
**A2**

(12) **EUROPÄISCHE PATENTANMELDUNG**

(21) Anmeldenummer: **87106195.8**

(22) Anmeldetag: **29.04.87**

(51) Int. Cl.4: **G01S 13/86**

(30) Priorität: **28.05.86 DE 3618021**

(43) Veröffentlichungstag der Anmeldung:
**02.12.87 Patentblatt 87/49**

(84) Benannte Vertragsstaaten:
**DE FR GB IT NL SE**

(71) Anmelder: **Fried. Krupp Gesellschaft mit beschränkter Haftung**
**Altendorfer Strasse 103**
**D-4300 Essen 1(DE)**

(72) Erfinder: **Plümecke, Gerrit**
**Völkerser Strasse 126**
**D-2800 Bremen 44(DE)**

(54) **Verfahren zum Orten eines Unterwasserziels.**

(57) Bei einem Verfahren zum Orten eines Unterwasserziels mittels einer Aktiv-Sonaranlage wird zwecks Verbesserung der Ortungsgenauigkeit ein akustisch und elektromagnetisch vermeßbares Hilfsziel in Zielnähe ausgebracht und dieses Hilfsziel mit der Aktiv-Sonaranlage und einer Radaranlage vermessen. Der zwischen den beiden Vermessungen bestehende Fehler wird bestimmt und die mit der Sonarortung ermittelte Zielposition des Unterwasserziels um diesen Fehler korrigiert.

EP 0 247 375 A2

## Verfahren zum Orten eines Unterwasserziels

Die Erfindung betrifft ein Verfahren zum Orten eines Unterwasserziels der im Oberbegriff des Anspruchs 1 genannten Art.

Die erfolgreiche Bekämpfung von U-Booten mit U-Jagd-Raketen erfordert wegen des begrenzten Wirkradius der Sprengladung des Raketenkopfes eine genaue Zielvermessung, also eine genaue Ortung des U-Bootes. Getauchte U-Boote können nur mit Aktiv-Bordsonaren zuverlässig geortet werden. Übliche Aktiv-Sonaranlagen besitzen jedoch einen unvermeidlichen Ortungsfehler, insbesondere einen relativ großen Peilfehler infolge der bei großen Ortungsreichweiten nicht ausreichend schmalen Bündelung des Empfangsbeams (Richtkeule) im Azimut. In Radialrichtung kann der Ortungsfehler durch Ausbreitungsverzerrungen im Wasser ebenfalls relative große Werte annehmen. Bei modernen Aktiv-Sonaranlagen mit ihren großen Ortungsreichweiten können unter ungünstigen Randbedingungen Ortungsfehler auftreten, die z. B. bei einer Entfernung von 10 km eine Zielunsicherheitsfläche von 600 m in der Raumtiefe und 1250 m im Azimut aufspannen. Diese Ortungsfehler machen in Verbindung mit dem begrenzten Wirkungsradius des Raketensprengkopfes U-Jagd-Raketen wenig effektiv.

Der Erfindung liegt die Aufgabe zugrunde, ein Verfahren zum Orten eines Unterwasserziels, also zum Bestimmen der Position des Unterwasserziels, der eingangs genannten Art derart zu verbessern, daß der Ortungsfehler bzw. der Fehler in der Positionsbestimmung auf ein Maß reduziert wird, der kleiner ist als der Wirkungsradius des Sprengkopfes der zur U-Boot-Jagd verwendeten herkömmlichen Raketen. Die Aufgabe ist bei einem Verfahren der im Oberbegriff des Anspruchs 1 definierten Gattung erfindungsgemäß durch die Merkmale im Kennzeichenteil des Anspruchs 1 gelöst.

Mit dem erfindungsgemäßen Verfahren wird der Ortungsfehler der Aktiv-Sonaranlage auf den mit einer Radaranlage erzielbaren wesentlich kleineren Vermessungsfehler reduziert. Das Unterwasserziel wird sozusagen durch die Sonaranlage mit Radargenauigkeit vermessen. Für diese Ortungsverbesserung sind keinerlei zusätzliche Mittel notwendig, da für die U-Boot-Jagd benutzte Schiffe üblicherweise mit Radaranlagen ausgerüstet sind. Als Transportmittel für das Ausbringen des Hilfsziels in die unmittelbare Nähe des Unterwasserziels eignen sich Artillerie, Raketen, aber auch Flugzeuge und Hubschrauber, die ebenfalls an Bord mitgeführt werden.

Mit dem erfindungsgemäßen Verfahren wird eine so wesentliche Verbesserung des Ortungsergebnisses erzielt, daß die Zielerwartungsfläche bzw. das Zielunsicherheitsgebiet in dem eingangs angeführten Beispiel mit dem erfindungsgemäßen Verfahren bei der Entfernung von 10 km auf 140 m in der Raumtiefe und 200 m im Azimut eingeschränkt wird.

Das erfindungsgemäße Verfahren ist anhand eines in der Zeichnung dargestellten Ausführungsbeispiels im folgenden näher beschrieben. Es zeigen:

Fig. 1 eine Skizze einer Gefechtslage auf See bei U-Boot-Jagd,

Fig. 2 einen Ausschnitt eines Bildschirms einer Anzeigevorrichtung mit der Darstellung der Gefechtslage in Fig. 1.

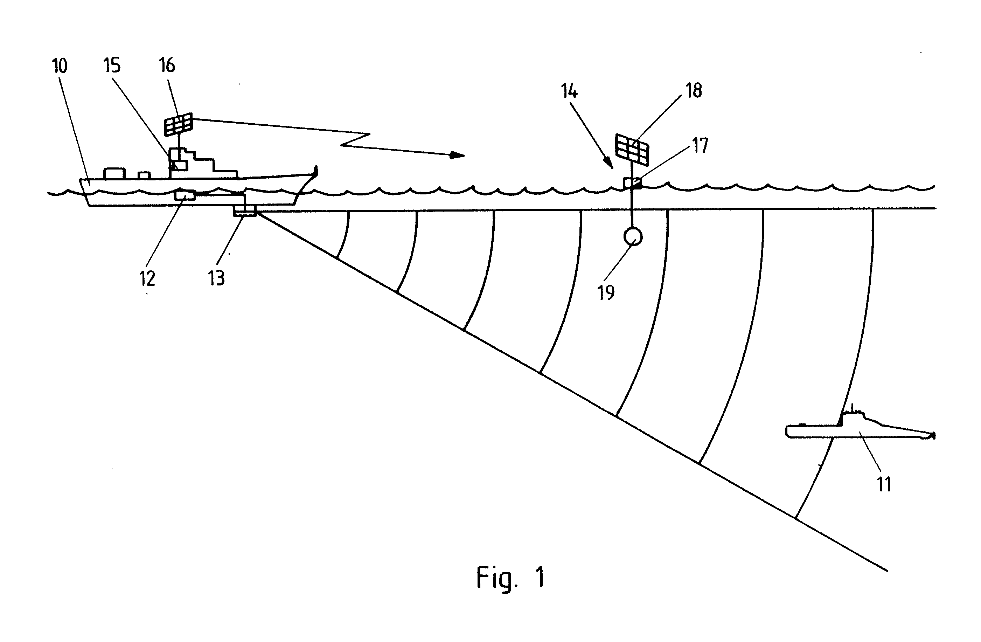

In Fig. 1 ist mit 10 ein zur Jagd von U-Booten 11 eingesetztes Überwasserschiff bezeichnet. Das Überwasserschiff 10 ist zum Aufspüren und Orten von U-Booten mit einer Aktiv-Sonar-Anlage 12 ausgerüstet, deren mit Wasserschallwandlern bestückte Sonarbasis 13 am Schiffskiel angeordnet ist. Die Sonarbasis 13 weist eine Richtcharakteristik auf, deren Hauptkeule im Azimut einen extrem kleinen Öffnungswinkel und in Elevation einen relativen großen Öffnungswinkel besitzt. Die Richtcharakteristik ist im Azimut über 360°C schwenkbar, wobei in jeder Azimutrichtung von der Sonarbasis 13 in bekannter Weise Schallimpulse ausgesendet und die von Unterwasserzielen reflektierten Echos empfangen werden. Aus der Laufzeit der Schallimpulse von der Sonarbasis zum Unterwasserziel, hier U-Boot 11, und zurück wird die Zielentfernung berechnet. Die Winkelablage der U-Boot-Position zu einer Bezugsgeraden, üblicherweise die Nordrichtung, die sog. Peilung des U-Boots 11, wird durch den Schwenkwinkel der Richtcharakteristik der Sonarbasis 13 festgelegt, unter welchem Echos von dem U-Boot 11 empfangen werden.

Das von der Sonarbasis 13 sukzessiv beleuchtete Sende-und Empfangsgebiet verbreitet sich infolge des nicht unendlich kleinen Öffnungswinkels der Richtcharakteristik mit zunehmender Entfernung. Wird ein U-Boot in sehr großer Entfernung gepeilt, so ist daher die Peilung mit einem relativ großen Fehler behaftet. Auch die mittels der Signallaufzeit bestimmte Entfernung zum U-Boot 11 kann aufgrund von auftretenden Ausbreitungsverzerrungen des Wassers mit mehr oder weniger großen Fehlern behaftet sein.

Um diese Vermessungsfehler zu reduzieren wird vom Überwasserschiff 10 aus in der Nähe des aufgefaßten und georteten U-Bootes 11 ein Hilfsziel 14 ausgebracht. Das Hilfsziel 14 kann entweder mittels Artillerieraketen verschossen oder von einem Flugzeug oder einem Hubschrauber in Nähe des georteten U-Bootes 11 abgeworfen werden. Hubschrauber oder Artillerieraketen werden üblicherweise von dem Überwasserschiff 10 mitgeführt.

Das Hilfsziel 14 ist so ausgebildet, daß es sowohl elektromagnetisch mit einer auf dem Überwasserschiff 10 installierten Radaranlage 15, deren Antenne mit 16 bezeichnet ist, als auch akustisch von der Aktiv-Sonaranlage 12 vermessen werden kann. Hierzu weist das Hilfsziel 14 einen Schwimmkörper 17, einen Radarreflektor 18 und einen akustischen Transponder 19 auf. Der Radarreflektor 18 ragt von dem Schwimmkörper 17 nach oben über die Wasseroberfläche hinaus, während der akustische Transponder 19 in eine Tiefe von ca. 15 m abgesenkt wird. Anstelle des Transponders 19 kann auch ein akustischer Reflektor und anstelle des Radarreflektors 18 auch ein Radartransponder verwendet werden. Akustische Transponder arbeiten - ebenso wie Radartransponder - bekanntermaßen in der Weise, daß sie bei Empfang eines Schallimpulses bzw. Radarimpulses nach einer bestimmten Zeitverzögerung ein Antwortsignal omnidirektional aussenden, das dann von der Radarantenne 16 oder der Sonarbasis 13 empfangen wird.

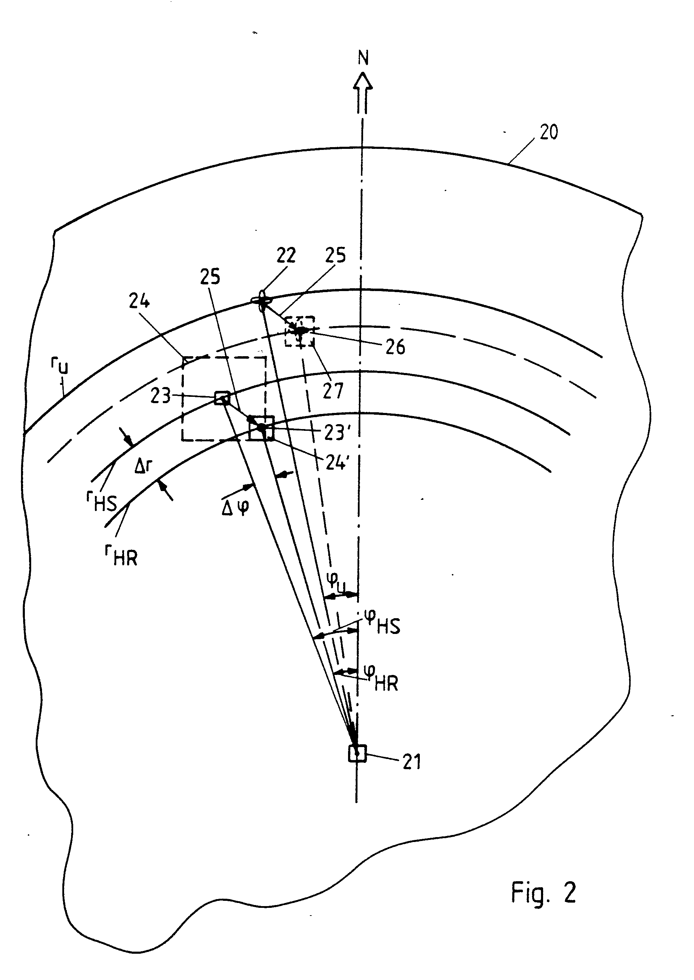

In Fig. 2 ist ein Ausschnitt eines Bildschirms 20 einer Anzeigevorrichtung dargestellt, auf welchem sowohl die Ortungssignale der Aktiv-Sonaranlage 12 als auch die Ortungssignale der Radaranlage 15 dargestellt werden. Die Darstellung erfolgt dabei in Relativ-Motion, so daß die Position des Überwasserschiffes 10, die in Fig. 2 mit 21 gekennzeichnet ist, immer im Zentrum des Bildschirms 20 angezeigt wird. Mit der Aktiv-Sonaranlage 12 wird das U-Boot 11 unter einem Peilwinkel $\phi_U$ und in einer Entfernung $r_U$ geortet. Nach Ausbringen des Hilfsziels 14 wird dieses von der Sonaranlage 12 unter einem Peilwinkel $\phi_{HS}$ und in einer Entfernung $r_{HS}$ vermessen. Von der Radaranlage 15 wird das Hilfsziel 14 mit einem Peilwinkel $\phi_{HR}$ und in einer Entfernung $r_{HR}$ geortet. In Fig. 2 sind die Peilstrahlen vom Überwasserschiff 10 (Position 21) zu dem U-Boot 11 (Position 22) und zu dem Hilfsziel 14 (Positon 23 bei Sonarvermessung und Postion 23' bei Radarvermessung) eingezeichnet. Der bei der Ortung des Hilfs ziels 14 gemachte Fehler ergibt eine Zielerwartungsfläche oder ein Zielerwartungsgebiet, das für die Sonarortung strichliniert eingezeichnet und mit 24 und für die Radarortung ausgezogen dargestellt und mit 24' bezeichnet ist. Wie deutlich zu erkennen ist, ist die Zielerwartungsfläche 24 bei der Sonarvermessung wesentlich größer als die Zielerwartungsfläche 24' bei der Radarvermessung.

Die Ortungsergebnisse bei der Ortung des Hilfsziels 14 werden nun miteinander verglichen, und der Fehler zwischen der Sonarortung und der Radarortung des Hilfsziels 14 wird bestimmt. Dieser Fehler ist in Fig. 2 durch einen Fehlervektor 25 mit den Vektorkomponenten $\Delta r$ und $\Delta\phi$ symbolisiert, der von der Position 23 des Hilfsziels 14 zu der Position 23' des Hilfsziels 14 verläuft. Mit diesem Korrekturvektor 25 wird nunmehr die von der Sonaranlage 14 ermittelte Zielposition 22 des U-Bootes 11 korrigiert, so daß sich eine optimierte Position des U-Bootes 11 in der Position 26 ergibt, die von einem Zielunsicherheitsgebiet 27 umgeben ist, das durch die kleinere Fehlerungenauigkeit der Radaranlage 15 festgelegt ist.

Wird nunmehr zur Bekämpfung des U-Bootes eine U-Jagd-Rakete von dem Überwasserschiff 10 auf die optimierte Position 26 des U-Bootes 11 abgeschossen, so wird das U-Boot 11 mit relativ großer Sicherheit zerstört, da der Wirkradius des Sprengkopfes der Rakete größer ist als das Zielunsicherheitsgebiet 27, mit welchem die optimierte Zielposition 26 des U-Bootes 11 behaftet ist.

## Ansprüche

1. Verfahren zum Orten eines Unterwasserziels, bei welchem mittels einer Aktiv-Sonaranlage Schallimpulse zusgesendet und vom Unterwasserziel reflektierte Echos mit zumindest im Azimut kleinem Öffnungswinkel empfangen werden und aus der Empfangsrichtung und den Laufzeiten der Echos die Zielposition bestimmt wird, dadurch gekennzeichnet, daß ein akustisch und elektromagnetisch vermeßbares Hilfsziel (14) in Zielnähe, z. B. durch Verschießen, ausgebracht wird, daß das Hilfsziel (14) einerseits mit der Aktiv-Sonaranlage (12) und andererseits mit einer Radaranlage (15) vom gleichen Ort aus geortet wird, daß der Fehler (25) zwischen der Sonarortung und der Radarortung des Hilfsziels (14) bestimmt wird und daß die durch die Sonarortung ermittelte Zielposition (22) um diesen Fehler (25) korrigiert wird.

2. Vorrichtung zur Durchführung des Verfahrens nach Anspruch 1, dadurch gekennzeichnet, daß das Hilfsziel (14) einen Schwimmkörper (17) aufweist, von welchem einerseits ein elektromagnetisch sensitives Element (18) nach oben über die Wasseroberfläche vorsteht und andererseits ein akustisch sensitives Element (19) ins Wasser, vorzugsweise in eine Wassertiefe von ca. 15 m, eintaucht.

3. Vorrichtung nach Anspruch 2, dadurch gekennzeichnet, daß das elektromagnetisch sensitive Element als Radarreflektor (18) oder Radartransponder ausgebildet ist.

4. Vorrichtung nach Anspruch 2 oder 3, dadurch gekennzeichnet, daß das akustisch sensitive Element als akustischer Reflektor oder als akustische Antwortimpulse abstrahlender Transponder (19) ausgebildet ist.

Fig. 1

0 247 375

Fig. 2